# EUROPÄISCHE PATENTANMELDUNG

(11) **EP 3 372 876 A1**
(43) Veröffentlichungstag der Anmeldung: **12.09.2018**
(21) Anmeldenummer: 17465505.0
(22) Anmeldetag: 06.03.2017
(51) Int. Cl.: F16K 11/085

(54) **VENTILANORDNUNG ZUR STEUERUNG EINES FLÜSSIGKEITSSTROMES**

(71) Anmelder: Continental Automotive GmbH, 30165 Hannover (DE)
(72) Erfinder: Giurgica, Alexandru, 310359 Arad (RO); Parsan, Vlad, 300737 Timisoara (RO); Popa, Alexandru, 240048 Rimnicu Vilcea (RO); Aronet, Vlad, 325300 Bocsa, Caras-Severin (RO); Crisan, Ciprian-Dimitrie, 310068 Arad (RO); Csukas, Eduard-Sebastian, 310290 Arad (RO); Albert, Eusebio-Marius, 300737 Timisoara (RO)

(57) **Zusammenfassung**

Bei einer Ventilanordnung (1) zur Steuerung eines Flüssigkeitsstromes eines Kühl- oder Heizmittels in einem Kraftfahrzeug hat ein drehbar gelagerter Ventilkörper (25) einen zentralen Kanal (30) zur Verbindung von in unterschiedlichen axialen Positionen angeordneten Taschen (26 - 29). In einem Gehäuse (12) sind in den Taschen (26 - 29) entsprechenden axialen Positionen Öffnungen (15 - 18) angeordnet, welche mit einzelnen Anschlüssen (2 - 5) verbunden sind. Damit lassen sich die einzelnen Anschlüsse (2 - 5) durch eine geeignete Drehstellung des Ventilkörpers (25) miteinander verbinden.

## Beschreibung

Die Erfindung betrifft eine Ventilanordnung zur Steuerung eines Flüssigkeitsstromes, insbesondere eines Kühl- oder Heizmittels in einem Kraftfahrzeug, über zumindest mehrere Anschlüsse, wobei die Anschlüsse in einem Gehäuse angeordnet sind und die Anschlüsse zu einer gemeinsamen Ventilkammer im Gehäuse geführt sind und ein Ventilkörper in der Ventilkammer zur Steuerung der Anschlüsse drehbar gelagert ist, wobei der Ventilkörper an seinem Umfang Taschen zur Verbindung mit einzelnen Anschlüssen aufweist.

Solche Ventilanordnungen werden in heutigen Kraftfahrzeugen häufig zur Steuerung eines Kühlwasserkreislaufs, eines Mediums einer Klimaanlage, eines Ölkreislaufs oder dergleichen häufig eingesetzt und sind aus der Praxis bekannt.

Bei einer aus der Praxis bekannten Ventilanordnung wird ein Drei-Wege-Ventil angeordnet, um beispielsweise zwei parallel geschaltete Einrichtungen gemeinsam oder getrennt anzusteuern. Die Beheizung oder Kühlung des Flüssigkeitsstroms erfolgt meist dadurch, dass ein weiteres Drei-Wege-Ventil eingesetzt wird, welches den Flüssigkeitsstrom wahlweise über eine Heizeinrichtung oder Kühleinrichtung oder an der Heizeinrichtung oder Kühleinrichtung vorbei leitet. Eine solche Reihenschaltung von Drei-Wege-Ventilen führt zu einem sehr großen baulichen Aufwand. Weiterhin erfordert die Ansteuerung der großen Anzahl an Ventilen einen sehr großen Steuerungsaufwand.

Der Erfindung liegt das Problem zugrunde, eine Ventilanordnung der eingangs genannten Art so weiter zu bilden, dass durch eine einzige Ansteuerung eine Vielzahl von Anschlüssen steuerbar ist.

Dieses Problem wird erfindungsgemäß dadurch gelöst, dass die Taschen des Ventilkörpers axial voneinander beabstandet und jeweils einem der Anschlüsse zugeordnet sind, dass mehrere axial voneinander beabstandete Taschen miteinander verbunden sind, dass zu den Anschlüssen führende Öffnungen jeweils in unterschiedlichen, den axialen Positionen der Taschen entsprechenden Höhen im Gehäuse angeordnet sind und dass der Ventilkörper mit einem ansteuerbaren Aktor verbunden ist.

Durch diese Gestaltung lassen sich die einzelnen Anschlüsse verschließen, wenn die entsprechende Tasche aus der Öffnung verdreht ist. Eine Zuordnung der Anschlüsse zu den Taschen gestaltet sich damit besonders einfach. Ein gezieltes Überströmen von dem einen Anschluss zu einem anderen Anschluss im Gehäuse wird durch die Verbindung mehrerer Taschen einfach festgelegt. Damit liegt die Positionen und die Abmessungen der einzelnen Taschen zu den Positionen und den Abmessungen der einzelnen Öffnungen im Gehäuse die Steuerung des Flüssigkeitsstroms fest. Diese Ventilanordnung ist hierdurch besonders stabil und unanfällig gegenüber äußeren Störungen.

Die Ventilanordnung ist gemäß einer anderen vorteilhaften Weiterbildung der Erfindung besonders stabil gegen äußere Einflüsse, wenn der Aktor als elektrischer Schrittmotor zur Einstellung der Drehstellung des Ventilkörpers ausgebildet ist. Weiterhin lässt sich hierdurch die Position des Ventilkörpers und damit die Verbindung der einzelnen Anschlüsse einfach steuern.

Sämtliche Anschlüsse lassen sich gemäß einer anderen vorteilhaften Weiterbildung der Erfindung radial in das Gehäuse führen, wenn der Ventilkörper zylindrisch gestaltet und zur radialen Anströmung ausgebildet ist. Durch diese Gestaltung wird ein axiales Anströmen des Ventilkörpers wie bei bekannten Ventilen vermieden. Die Ventilanordnung gestaltet sich hierdurch besonders kompakt.

Die Steuerung des Flüssigkeitsstroms gestaltet sich gemäß einer anderen vorteilhaften Weiterbildung der Erfindung besonders einfach, wenn der Ventilkörper axial unverschieblich in der Ventilkammer gelagert ist und eine Antriebswelle zur Verbindung mit dem Aktor hat.

Eine Drosselung des Flüssigkeitsstroms durch die Öffnungen der Ventilkammer lässt sich gemäß einer anderen vorteilhaften Weiterbildung der Erfindung besonders gering halten, wenn die Ventilkammer von einem Mantel radial außen begrenzt ist, wenn der Mantel die Öffnungen aufweist, wenn zwischen den Anschlüssen und dem Mantel jeweils eine bis zu der jeweiligen Öffnung geführte Sammelkammer angeordnet ist und wenn die Sammelkammern axial bis zu einem Rand des Mantels geführt sind.

Die Ventilanordnung lässt sich gemäß einer anderen vorteilhaften Weiterbildung der Erfindung besonders kostengünstig fertigen, wenn das Gehäuse eine topfförmige Vertiefung zur Bildung der Ventilkammer und mehrere Ringsektoren zur Bildung der Sammelkammern hat und wenn die Ventilkammer und die Sammelkammern von einem Ventildeckel verschlossen sind. Durch diese Gestaltung lassen sich Ventilkammer und die Sammelkammern in einer axial entformbaren Spritzgussform besonders kostengünstig fertigen.

Der Flüssigkeitsstrom durch einen der Anschlüsse lässt sich gemäß einer anderen vorteilhaften Weiterbildung der Erfindung besonders gleichmäßig regeln, wenn der Winkelbereich, über den sich eine Tasche erstreckt, doppelt so groß ist wie der Winkelbereich, über den sich die zugehörige Öffnung erstreckt.

Die Flüssigkeitsströme lassen sich gemäß einer anderen vorteilhaften Weiterbildung der Erfindung durch eine entsprechende Wahl von Abmessungen der Taschen einfach lenken, wenn die verschiedenen Taschen sich über unterschiedliche Winkelbereiche erstrecken. Durch diese Gestaltung kann beispielsweise ein gemeinsamer Zufluss der Anschlüsse dadurch gebildet werden, dass sich die Tasche über 360° des Ventilkörpers erstreckt, während die für verschiedene Abflüsse vorgesehene Anschlüsse sich jeweils nur über einen Teilbereich des Umfangs des Ventilkörpers erstrecken.

Zur alternativen Vereinfachung der Lenkung der Flüssigkeitsströme trägt es gemäß einer anderen vorteilhaften Weiterbildung der Erfindung bei, wenn die verschiedenen Öffnungen sich über unterschiedliche Winkelbereiche erstrecken.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch eine Ventilanordung in einem Kraftfahrzeug,
- Fig. 2: eine Schnittdarstellung durch die Ventilanordnung aus Figur 1 entlang der Linie II - II,
- Fig. 3: eine Schnittdarstellung durch die Ventilanordnung aus Figur 2 entlang der Linie III - III,
- Fig. 4: eine Schnittdarstellung durch die Ventilanordnung aus Figur 2 entlang der Linie IV - IV,
- Fig. 5: eine Schnittdarstellung durch die Ventilanordnung aus Figur 2 entlang der Linie V - V,
- Fig. 6: eine Schnittdarstellung durch die Ventilanordnung aus Figur 2 entlang der Linie VI - VI,
- Fig. 7: ein Flussdiagramm durch einzelne Anschlüsse der Ventilanordnung in Abhängigkeit von der Drehstellung eines Ventilkörpers.

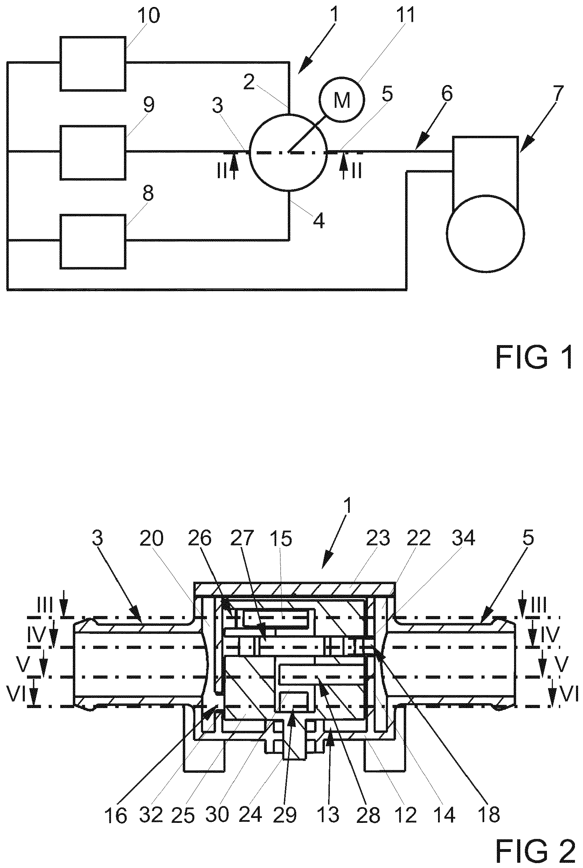

Figur 1 zeigt schematisch eine in einem Kraftfahrzeug angeordnete Ventilanordnung 1. Die Ventilanordnung 1 hat im vorliegenden Ausführungsbeispiel vier Anschlüsse 2 - 5, die mit einem Kühlmittelkreislauf 6 einer Brennkraftmaschine 7 und drei weiteren Einrichtungen 8 - 10 verbunden sind. Bei den Einrichtungen 8 - 10 kann es sich um verschiedene Heizungen, Kühler oder Speicher oder dergleichen handeln. Die Ventilanordnung 1 hat einen Aktor 11 zur Steuerung eines Flüssigkeitsstroms zwischen den Anschlüssen 2 - 5. Der Aktor 11 ist elektrischer Schrittmotor ausgebildet.

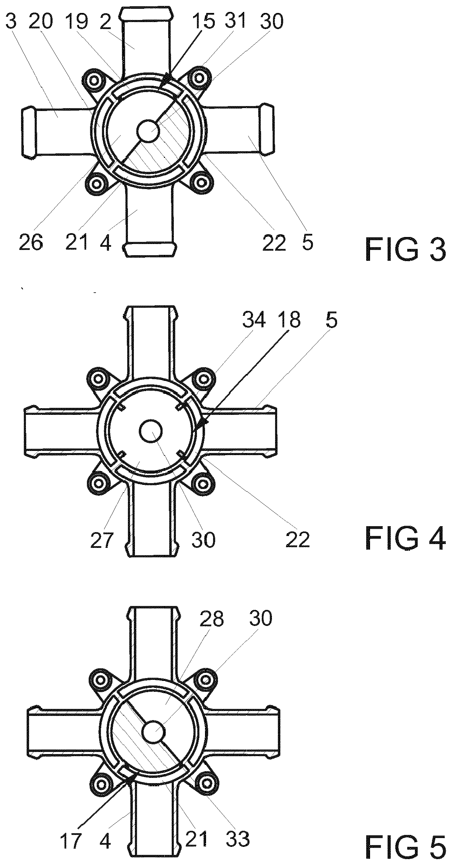

Figur 2 zeigt die Ventilanordnung 1 aus Figur 1 in einem Längsschnitt entlang der Linie II - II. Die Ventilanordnung 1 hat ein Gehäuse 12 mit einer topfförmig gestalteten Ventilkammer 13. Die Ventilkammer 13 ist von einem Mantel 14 begrenzt. In dem Mantel 14 sind in unterschiedlichen Höhen zu den Anschlüssen 2 - 5 führende Öffnungen 15 - 18 angeordnet, von denen in der Schnittdarstellung der Figur 2 nur drei dargestellt sind. Die vierte Öffnung 17 im Mantel 14 ist in Figur 5 dargestellt. Die Anschlüsse 2 - 5 führen jeweils in eine Sammelkammer 19 - 22, welche sich über die Höhe der Ventilkammer 13 erstrecken. Die Ventilkammer 13 und die Sammelkammern 19 - 22 sind von einem Ventildeckel 23 dicht verschlossen. Auf der dem Ventildeckel 23 abgewandten Seite ist eine Antriebswelle 24 für einen in der Ventilkammer 13 angeordneten Ventilkörper 25 hindurchgeführt. Die Antriebswelle 24 ist zu dem in Figur 1 dargestellten Aktor 11 geführt. Über den Aktor 11 wird die Drehstellung des Ventilkörpers 25 eingestellt. Der Ventilkörper 25 hat in verschiedenen axialen Positionen angeordnete Taschen 26 - 29. Die Taschen 26 - 29 sind über einen zentralen Kanal 30 untereinander verbunden. Die axialen Positionen der Taschen 26 - 29 entsprechen den axialen Positionen der Öffnungen 15 - 18 in dem Mantel 14.

Die Öffnungen 15 - 18 weisen jeweils Dichteinsätze 31 - 34 zur Abdichtung gegenüber dem äußeren Umfang des Ventilkörpers 25 auf.

Die Figuren 3 bis 5 zeigen jeweils Schnittdarstellungen durch die Ventilanordnung 1 aus Figur 2 in unterschiedlichen axialen Positionen. Diese axialen Positionen entsprechen jeweils einer den Anschlüssen 2 - 5 zugeordneten Öffnung 15 - 18.

Figur 3 zeigt in einer Schnittdarstellung entlang der Linie III - III aus Figur 2, dass sich die Tasche 26 über 180° des Umfangs des Ventilkörpers 25 erstreckt. Die dem einen Anschluss 2 zugeordnete Öffnung 15 erstreckt sich über annähernd 90°. Damit wird dieser Anschluss 2 in Abhängigkeit von der Drehstellung des Ventilkörpers 25 mit dem zentralen Kanal 30 verbunden.

Figur 4 zeigt eine Schnittdarstellung durch die Ventilanordnung 1 aus Figur 2, dass sich die dem einen Anschluss 5 zugeordnete Tasche 29 in dieser axialen Höhe über 360° erstreckt. Damit ist der in dieser Höhe über die eine Öffnung 18 angeschlossene Anschluss 5 ständig mit dem zentralen Kanal 30 verbunden.

Figur 5 zeigt in einer Schnittdarstellung entlang der Linie V - V aus Figur 2, dass sich die in dieser axialen Position befindliche 28 Tasche über 180° des Ventilkörpers 25 erstreckt. Diese Anordnung entspricht damit der aus Figur 3, jedoch um einen Drehwinkel von 180° versetzt. Die in dieser axialen Position befindliche Öffnung 17 ist damit von dem in dieser Drehstellung befindlichen Ventilkörper 25 verschlossen.

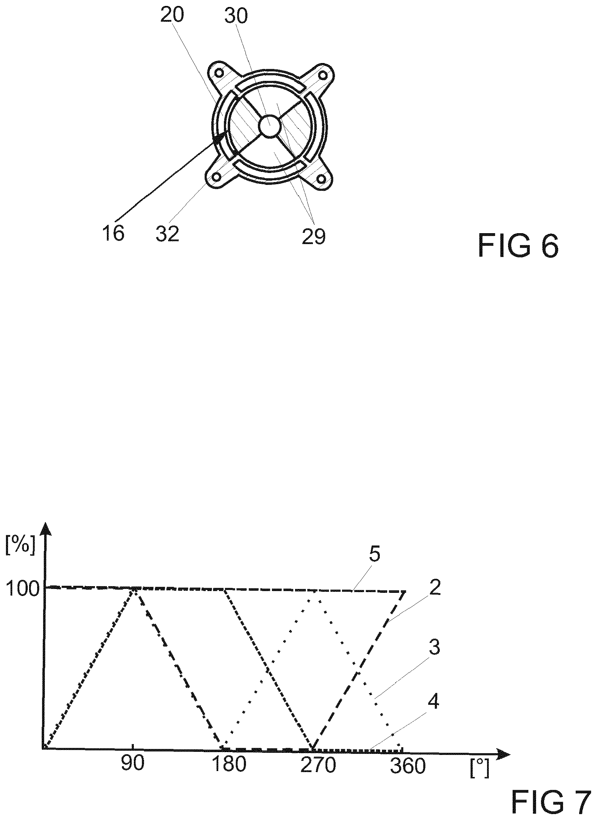

Figur 6 zeigt in einer Schnittdarstellung entlang der Linie VI - VI aus Figur 2, dass sich die in dieser axialen Position befindliche Tasche 29 über zweimal 90° des Ventilkörpers 25 erstreckt. Auch hier ist die in dieser axialen Position befindliche Öffnung 16 von dem Ventilkörper verschlossen.

Figur 7 zeigt ein Diagramm der Ventilanordnung 1 aus den Figuren 1 bis 6 mit der Abhängigkeit der Verbindung der einzelnen Anschlüsse 2 - 5 mit dem zentralen Kanal 30. Hierbei ist der Drehwinkel des Ventilkörpers 25 über die Freigabe der einzelnen Öffnungen 15 - 18 in Prozent dargestellt. Da der zentrale Kanal 30 die einzelnen Taschen 26 - 29 im Ventilkörper 25 miteinander verbindet, entspricht die Angabe 100% eine vollständige Freigabe des Flüssigkeitsstroms durch den mit der jeweiligen Öffnung 15 - 18 verbundenen Anschluss 2 - 5.

Selbstverständlich kann die Ventilanordnung in einer weiteren, nicht dargestellten Ausführungsform mehr als vier Anschlüsse mit jeweils zugeordneten Öffnungen und Taschen aufweisen. Zudem können sich die einzelnen Öffnungen auch über unterschiedliche Winkelbereiche erstrecken.

## Patentansprüche

1. Ventilanordnung (1) zur Steuerung eines Flüssigkeitsstromes, insbesondere eines Kühl- oder Heizmittels in einem Kraftfahrzeug, über zumindest mehrere Anschlüsse (2 - 5), wobei die Anschlüsse (2 - 5) in einem Gehäuse (12) angeordnet sind und die Anschlüsse (2 - 5) zu einer gemeinsamen Ventilkammer (13) im Gehäuse (12) geführt sind und ein Ventilkörper (25) in der Ventilkammer (13) zur Steuerung der Anschlüsse (2 - 5) drehbar gelagert ist, wobei der Ventilkörper (25) an seinem Umfang Taschen (26 - 29) zur Verbindung mit einzelnen Anschlüssen (2 - 5) aufweist, **dadurch gekennzeichnet, dass** die Taschen (26 - 29) des Ventilkörpers (25) axial voneinander beabstandet und jeweils einem der Anschlüsse (2 - 5) zugeordnet sind, dass mehrere axial voneinander beabstandete Taschen (26 - 29) miteinander verbunden sind, dass zu den Anschlüssen (2 - 5) führende Öffnungen (15 - 18) jeweils in unterschiedlichen, den axialen Positionen der Taschen (26 - 29) entsprechenden Höhen im Gehäuse (12) angeordnet sind und dass der Ventilkörper (25) mit einem ansteuerbaren Aktor (11) verbunden ist.

2. Ventilanordnung nach Anspruch 1, **dadurch gekennzeichnet, dass** der Aktor (11) als elektrischer Schrittmotor zur Einstellung der Drehstellung des Ventilkörpers (25) ausgebildet ist.

3. Ventilanordnung nach Anspruch 1 oder 2, **dadurch gekennzeichnet, dass** mehrere axial voneinander beabstandete Taschen (26 - 29) miteinander verbunden sind.

4. Ventilanordnung nach einem der vorhergehenden Ansprüche, **dadurch gekennzeichnet, dass** der Ventilkörper (25) zylindrisch gestaltet und zur radialen Anströmung ausgebildet ist.

5. Ventilanordnung nach einem der vorhergehenden Ansprüche, **dadurch gekennzeichnet, dass** der Ventilkörper (25) axial unverschieblich in der Ventilkammer (13) gelagert ist und eine Antriebswelle (24) zur Verbindung mit dem Aktor (11) hat.

6. Ventilanordnung nach einem der vorhergehenden Ansprüche, **dadurch gekennzeichnet, dass** die Ventilkammer (13) von einem Mantel (14) radial außen begrenzt ist, dass der Mantel (14) die Öffnungen (15 - 18) aufweist, dass zwischen den Anschlüssen (2 - 5) und dem Mantel (14) jeweils eine bis zu der jeweiligen Öffnung (15 - 18) geführte Sammelkammer (19 - 22) angeordnet ist und dass die Sammelkammern (19 - 22) axial bis zu einem Rand des Mantels (14) geführt sind.

7. Ventilanordnung nach einem der vorhergehenden Ansprüche, **dadurch gekennzeichnet, dass** das Gehäuse (12) eine topfförmige Vertiefung zur Bildung der Ventilkammer (13) und mehrere Ringsektoren zur Bildung der Sammelkammern (19 - 22) hat und dass die Ventilkammer (13) und die Sammelkammern (19 - 22) von einem Ventildeckel (23) verschlossen sind.

8. Ventilanordnung nach einem der vorhergehenden Ansprüche, **dadurch gekennzeichnet, dass** der Winkelbereich, über den sich eine Tasche (26 - 29) erstreckt, doppelt so groß ist wie der Winkelbereich, über den sich die zugehörige Öffnung (15 - 18) erstreckt.

9. Ventilanordnung nach einem der vorhergehenden Ansprüche, **dadurch gekennzeichnet, dass** die verschiedenen Taschen (26 - 29) sich über unterschiedliche Winkelbereiche erstrecken.

10. Ventilanordnung nach einem der vorhergehenden Ansprüche, **dadurch gekennzeichnet, dass** die verschiedenen Öffnungen (15 - 18) sich über unterschiedliche Winkelbereiche erstrecken.
